# EUROPÄISCHE PATENTSCHRIFT

(11) **EP 2 655 989 B1**
(45) Veröffentlichungstag und Bekanntmachung des Hinweises auf die Patenterteilung: **07.11.2018**
(21) Anmeldenummer: 11808559.6
(22) Anmeldetag: 19.12.2011
(51) Int. Cl.: F24S 23/74

(54) **AUFBLASBARER KONZENTRATOR ZUR BÜNDELUNG VON STRAHLUNG**
INFLATABLE CONCENTRATOR FOR CONCENTRATING RADIATION
CONCENTRATEUR GONFLABLE POUR LA CONCENTRATION DE RAYONNEMENT

(30) Priorität: 20.12.2010 AT 20932010
(43) Veröffentlichungstag der Anmeldung: 30.10.2013
(73) Patentinhaber: Heliovis AG, 2351 Wiener Neudorf (AT)
(72) Erfinder: MUNZENRIEDER, Gerald, A-7143 Apetlon (AT); SCHEIDL, Thomas, A-2722 Winzendorf (AT); STÖGER, Elmar, A-2822 Bad Erlach (AT)
(74) Vertreter: Sonn & Partner Patentanwälte
(86) Internationale Anmeldenummer: PCT/AT2011/000500
(87) Internationale Veröffentlichungsnummer: WO 2012/083321

(56) Entgegenhaltungen:
- WO-A1-01/01498
- DE-A1- 10 320 494
- DE-U1-202005 001 488
- US-A- 4 672 389
- US-A1- 2002 170 555
- US-A1- 2009 260 620

## Beschreibung

Die Erfindung betrifft einen aufblasbaren Konzentrator zur Bündelung von Strahlung, insbesondere Sonnenstrahlung, in einem daran befestigbaren Absorber, mit einer in einem aufgeblasenen Betriebszustand im Wesentlichen schlauchförmigen Hülle, die ein lichtdurchlässiges Eintrittsfenster zum Einkoppeln der Strahlung aufweist, und einer die Hülle in zumindest zwei Hohlkammern trennenden Reflektorfolie, die eine die eingekoppelte Strahlung in Richtung des Absorbers reflektierende Spiegelfläche aufweist.

Aus der US 2009/0260620 A1 ist ein Strahlungskollektor bekannt, welcher eine transparente Folie, eine Reflektorfolie und eine untere Folie aufweist. Die Folien sind über in Längsrichtung des Kollektors verlaufende Kanten miteinander verbunden. Gemäß einer Ausführung des bekannten Strahlungskollektors sind die transparente Folie und die unteren Folie zweigeteilt, wobei die Folienhälften mittels Klammern miteinander verbunden sind. Die Klammern sind hierbei mittig zwischen den Folienhälften der transparenten Folie bzw. der unteren Folie angeordnet. Diese Ausführung führt jedoch nachteiligerweise dazu, dass der Sonnenkollektor im unaufgeblasenen Zustand im Bereich der mittig angeordneten Klammern Wulste bzw. Verdickungen ausbildet, welche das Aufrollen des Sonnenkollektors beträchtlich erschweren oder gänzlich verhindern würden. In jedem Fall würde beim Aufrollen ein großer Platzbedarf entstehen. Ein weiterer Nachteil des bekannten aufblasbaren Sonnenkollektors besteht darin, dass die untere Klammer den Folienaufbau beim Transport beschädigen könnte.

In der AT 505 075 B1 ist ein weiterer aufblasbarer Sonnenkollektor in Form eines zylindrischen Schlauchs beschrieben, der oberhalb einer den Schlauch in zwei Kammern unterteilenden Reflektormembran durchsichtig ist. Die verspiegelte Reflektormembran erstreckt sich im Wesentlichen diametral entlang des gesamten Schlauches. Zur Umwandlung der Sonnenenergie ist oberhalb der Reflektormembran ein in Längsrichtung angeordneter Absorber vorgesehen, welcher beispielsweise als mediumdurchströmte Röhre ausgeführt sein kann; alternativ kann der Absorber durch Photovoltaikelemente gebildet sein. Zur terrestrischen Energiegewinnung wird der Sonnenkollektor in einer günstigen Position zum Sonnenstand angeordnet und dem Sonnenlauf nachgeführt. Die Sonnenstrahlung wird von der Reflektormembran in Richtung des Absorbers reflektiert, wodurch das Medium im Absorber stark erhitzt wird, was zur Energiegewinnung genutzt wird.

Aufblasbare Sonnenkollektoren stellen prinzipiell eine sehr vielversprechende Technologie zur Ausnutzung der Sonnenenergie dar und können zukünftig entscheidend zur Versorgung mit erneuerbarer Energie beitragen. Als problematisch hat sich in der Praxis jedoch die aufwendige und kostenintensive Fertigung solcher Konzentratoren erwiesen, welche einer größeren Verbreitung der aufblasbaren Konzentratoren entgegensteht. Die Konzentratoren wurden daher zumeist als Einzelstücke aus großflächigen Folien gefertigt, die mit erheblichem Aufwand zum fertigen Kissen zusammengestellt werden. Demzufolge wäre es wünschenswert, eine Serienproduktion derartiger Konzentratoren zu ermöglichen, wodurch die Stückkosten reduziert werden könnten. Ein weiterer Nachteil der bekannten Ausführungen aufblasbarer Sonnenkollektoren, aber auch herkömmlicher Parabolrinnenkraftwerke aus Spiegel- und Stahlkonstruktionen, besteht darin, dass der Aufbau üblicherweise erst am Einsatzort möglich ist, da die Dimensionen größerer Anlagen, welche eine Länge von beispielsweise mehr als 50 m erreichen können, einen Transport erschweren; die Montage vor Ort setzt jedoch geschultes Personal voraus, das an vielen Einsatzorten nicht zur Verfügung steht. Beim Transport des fertigen Konzentrators fallen andererseits aufgrund des - selbst im unaufgeblasenen Zustand - erheblichen Raumbedarfs hohe Transportkosten an, welche den Stückpreis der Konzentratoren hoch halten. Die bekannten Sonnenkollektoren sind jedoch, wie eingangs erwähnt, für einen Transport in einer kompakten Stellung nicht bzw. nur sehr eingeschränkt geeignet.

Demzufolge besteht die Aufgabe der vorliegenden Erfindung darin, einen kostengünstig herstellbaren, den Belastungen im Dauereinsatz zuverlässig standhaltenden aufblasbaren Konzentrator der eingangs angeführten Art zu schaffen, welcher in einer besonders platzsparenden Anordnung transportierbar ist. Zudem soll eine Beschädigung des Folienaufbaus beim Transport verhindert werden.

Diese Aufgabe wird durch einen aufblasbaren Konzentrator mit den Merkmalen von Anspruch 1 gelöst. Die Hülle ist aus einzelnen, über Fügeverbindungen miteinander verbundenen Folienelementen zusammengesetzt, wobei die Hülle im unaufgeblasenen Zustand in einer aufrollbaren Transportstellung anordenbar ist. Demnach ist die Konzentrator-Hülle aus einzelnen bzw. separaten Folienelementen aufgebaut, die über Fügeverbindungen miteinander verbunden sind. Der erfindungsgemäße Aufbau der Konzentrator-Hülle aus gefügten Folienelementen hat gegenüber einer einstückigen Ausführung der verschiedenen Folien der Hülle den Vorteil, dass vergleichsweise kleinflächige Folienstücke verwendet werden können, welche eine Herstellung der Hülle in grundsätzlich bekannten Fertigungsanlagen für die Verarbeitung von (Kunststoff-)Folienbahnen ermöglichen bzw. den Herstellungsprozess zumindest wesentlich einfacher gestalten. Eine Serienproduktion der Hülle ermöglicht insbesondere auch die kosteneffiziente Produktion größerer Hüllen, welche bislang lediglich in Einzelfertigung hergestellt werden konnten; zumindest können die Stückkosten beträchtlich reduziert werden, was die Verbreitung der aufblasbaren Konzentratoren begünstigen sollte. Die Konzentratoren weisen dabei bevorzugt eine Gesamtlänge von mehr als 20 Metern, insbesondere mehr als 50 Metern, und einen Durchmesser von mehr als 3 Metern, insbesondere mehr als 5 Metern, auf. Die Folienelemente der Hülle sind vorzugsweise aus geeigneten Kunststoff-Materialien gefertigt. Der Einsatz von Fügeverbindungen zwischen einzelnen Folienelementen der Hülle ermöglicht es einerseits, die Hülle im unaufgeblasenen bzw. unbefüllten Zustand in einer im Wesentlichen faltlinienfreien (bzw. umschlags- oder knicklinienfreien) Transportstellung anzuordnen, in welcher die verschiedenen Folien der Hülle als aufeinanderfolgende Schichten gestapelt sind. Somit können die Fügeverbindungen der Hülle bei dieser Ausführung Falt-, Umschlags- bzw. Knicklinien ersetzen, welche bei einer einstückigen Ausführung der Folien insbesondere an den Längsrändern der Hülle zwangsläufig auftreten würden. Alternativ kann die Fügeverbindung am Längsrand der Hülle eine definierte Längsfalte ausbilden. Somit können die Nachteile bekannter Konzentratoren überwunden werden, bei welchen im unaufgeblasenen Zustand an den Längsrändern Falt- bzw. Umschlagslinien ohne definierten Verlauf vorgesehen sind, so dass beim Versuch, die Hülle aufzuwickeln, ein Zerknittern der Hülle hervorgerufen würde. Bisher war ein platzsparendes, kompaktes Aufwickeln der Hülle nicht oder nur eingeschränkt möglich. Demgegenüber kann die aus gefügten Folienelementen zusammengesetzte Hülle zum Transport in besonders platzsparender Weise aus einer im Wesentlichen faltlinienfreien oder definierte Längsfalten aufweisenden Transportstellung auf eine Rolle, Hülse oder dergl. aufgerollt werden. Bei der bevorzugten Verwendung von Fügeverbindungen an den - bezogen auf den unaufgeblasenen Zustand - Längsrändern der Hülle kann eine besonders kompakte Anordnung der Hülle beim Aufwickeln zum Transport erzielt werden. Angesichts des geringen Platzbedarfs der aufgewickelten Hülle können die Transportkosten in der Folge erheblich reduziert werden, wodurch die Stückkosten automatisch sinken. Zudem können einzelne Fügeverbindungen die Ränder der Hülle im unaufgeblasenen Zustand festlegen, wodurch eine Positionierhilfe beim Aufwickeln der Hülle mit vorgegebener Breite geschaffen wird. Schließlich können die erfindungsgemäßen Fügeverbindungen Beschädigungen der Hülle vorbeugen. Wie im Zusammenhang mit dem zugehörigen Verfahren noch weiter erläutert wird, haben die Fügeverbindungen zudem erhebliche Vorteile für den Fertigungsprozess, da die einzelnen Folienelemente in der Fertigungsstraße in einer im Wesentlichen planen Stellung zu den jeweiligen Folien gefügt werden können, wobei ein produktionstechnisch aufwendiges Umschlagen der Folie nicht zwingend erforderlich ist. Nach dem platzsparenden Transport der Hülle im aufgerollten Zustand kann die Hülle am Einsatzort aufgestellt werden; anschließend kann der Absorber, welcher üblicherweise gesondert von der Hülle transportiert wird, eingesetzt werden. Zum Betrieb des Konzentrators werden die Hohlkammern der Hülle mit Luft (bzw. einem anderen geeigneten Gas) befüllt. Der Konzentrator ist somit selbsttragend ausgelegt, so dass auf aufwändige Tragevorrichtungen verzichtet werden kann. Hierdurch lässt sich gegenüber einem herkömmlichen Solarkonzentrator ein um ein Vielfaches geringeres Gewicht erzielen, was sich naturgemäß günstig auf die Herstellungs- bzw. Transportkosten auswirkt. Um die Hülle in einer besonders platzsparend aufrollbaren Transportstellung anordnen zu können, erstreckt sich zumindest eine Fügeverbindung im Wesentlichen über die gesamte Länge der Hülle. Demnach definiert die in Längsrichtung des Konzentrators verlaufende Fügeverbindung im unaufgeblasenen Zustand der Hülle einen Längsrand der Hülle, an welchem zwei übereinander angeordnete Schichten von Folienelementen aufeinandertreffen. Im nicht aufgeblasenen Zustand des Konzentrators verläuft die Fügeverbindung somit am Längsrand der Hülle, wodurch das Aufrollen des Konzentrators beträchtlich erleichtert wird, so dass der Konzentrator platzsparend zu seinem Einsatzort transportiert werden kann. Die Anordnung der Fügeverbindung am Längsrand der Hülle hat zudem den Vorteil, dass eine Beschädigung des Folienaufbaus zuverlässig vermieden wird, wenn die Hülle im nicht aufgeblasenen Zustand aufgerollt wird. Je nach Ausführung der Hülle kann die Fügeverbindung einerseits eine definierte Längsfalte zwischen zwei Folienelementen bilden. Andererseits kann die längsseitige Fügeverbindung im unaufgeblasenen Zustand der Hülle eine hinsichtlich eines Zerknitterns der Hülle beim Aufrollen ungünstige, nicht definierte Faltlinie ersetzen, welche bei einer einstückigen Ausführung der Folien durch längsseitiges Umschlagen der Folie entstehen würde. Die längsseitige Fügeverbindung hat zudem den Vorteil, dass die Hülle rasch und unkompliziert geöffnet werden kann.
Bei dem insbesondere allgemein zylindrischen Konzentrator ist weiters vorgesehen, dass die Hülle eine Bodenfolie aufweist, die an gegenüberliegenden Längsrändern jeweils über eine Fügeverbindung mit einer unteren Seitenwandfolie verbunden ist. Die Bodenfolie ist vorzugsweise durch eine Kunststofffolie gebildet. Bei einer besonders günstigen Ausführung definieren die längsseitigen Fügeverbindungen zwischen der Bodenfolie, welche im Betrieb einer Bodenfläche zugewandt ist, und der unteren Seitenwandfolie im unaufgeblasenen Zustand der Hülle gegenüberliegende Längsränder der Hülle. Die Bodenfolie und die untere Seitenwandfolie sind daher in der Transportstellung als im Wesentlichen plane Schichten übereinander angeordnet. Die längsseitigen Fügeverbindungen können dabei im unaufgeblasenen Zustand der Hülle längsseitige Falt- bzw. Umschlagslinien ohne definierten Verlauf ersetzen, welche bei einer einstückigen Ausführung der Bodenfolie mit der unteren Seitenwandfolie zwangsläufig vorhanden wären. Wie bereits erwähnt, kann die Hülle somit zum Transport im Wesentlichen ohne zu zerknittern platzsparend aufgerollt werden.

Beim erfindungsgemäßen Konzentrator ist es weiters günstig, wenn die Hülle eine an die untere Seitenwandfolie anschließende obere Seitenwandfolie aufweist, die an gegenüberliegenden Längsrändern jeweils über eine Fügeverbindung mit einer Deckfolie verbunden ist. Demnach bilden die untere und die obere Seitenwandfolie bezogen auf die aufgeblasene Betriebsstellung des Konzentrators die Seitenwände des Konzentrators. Die obere bzw. untere Seitenwandfolie ist vorzugsweise aus einem Kunststoff gefertigt. Im unaufgeblasenen Zustand der Hülle begrenzen die in Längsrichtung der Hülle verlaufenden Fügeverbindungen durch die untere bzw. obere Seitenwandfolie definierte Schichten, um an den Längsrändern Faltlinien ohne definierten Verlauf zu ersetzen, welche beim Aufrollen des Konzentrators hinderlich wären.

Zum Einkoppeln der Sonnenstrahlung in den Konzentrator ist es günstig, wenn die insbesondere aus mehreren, vorzugsweise vier, Folienelementen zusammengesetzte Deckfolie zur Ausbildung des Eintrittsfensters eine mit einem transparenten Folienelement verschlossene Ausnehmung aufweist. Um die Sonnenstrahlung mit hoher Effizienz in die Hülle einzukoppeln, ist es günstig, wenn das Eintrittsfenster durch ein hoch transparentes Folienelement insbesondere aus Ethylen-Tetrafluorethylen (ETFE) ausgebildet ist. Dieses Material zeichnet sich durch seine hervorragende Witterungsbeständigkeit und einen ausgeprägten Selbstreinigungseffekt aus.

Bei einer besonders bevorzugten Ausführung besteht die Deckfolie aus vier Folienelementen. Demzufolge weist die Deckfolie zwei in Längsrichtung der Hülle langgestreckte Folienstücke auf, welche in einem Abstand zueinander angeordnet sind, der die Breite des Eintrittsfensters festlegt; zudem sind bei dieser Ausführung zwei die langgestreckten Folienstücke an beiden Endbereichen quer verbindende Endabschnitte vorgesehen, deren Abstand zueinander die Länge des Eintrittsfensters bestimmt. Hierdurch kann der bei einem Ausschneiden der Ausnehmung entstehende Materialabfall in der Produktion der Deckfolie vermieden bzw. zumindest beträchtlich reduziert werden.

Zur Ausbildung der Spiegelfläche, welche im Betrieb die eingekoppelte Sonnenstrahlung in Richtung des Absorbers reflektiert, ist es von Vorteil, wenn die jeweils insbesondere aus mehreren, vorzugsweise vier, Folienelementen zusammengesetzte untere Seitenwandfolie und die obere Seitenwandfolie jeweils eine durch die Reflektorfolie verschlossene Ausnehmung aufweisen. Im Betrieb des Konzentrators wird über einen Druckunterschied zwischen den Hohlkammern eine Wölbung der Reflektorfolie eingestellt, welche eine zweckmäßige Fokussierung der eingekoppelten Sonnenstrahlung in den Absorber bewirkt. Somit lässt
sich durch Änderung der Druckdifferenz der Fokus der gebündelten Strahlen genau einstellen. Die Reflektorfolie ist vorzugsweise als verspiegelte Kunststofffolie ausgebildet. Entsprechend der mehrteiligen Ausführung der Deckfolie ist es zur Vermeidung von Materialabfällen zu bevorzugen, wenn die obere bzw. untere Seitenwandfolie aus insbesondere vier Folienelementen besteht, welche die von der Reflektorfolie verschlossene Ausnehmung begrenzen.

Um den Konzentrator bei Bedarf, insbesondere zur Durchführung von Montage- bzw. Wartungsarbeiten, auf besonders einfache Weise öffnen zu können, ist es von Vorteil, wenn zumindest eine Fügeverbindung, insbesondere die Fügeverbindung zwischen der Bodenfolie und der unteren Seitenwandfolie bzw. zwischen der oberen Seitenwandfolie und der Deckfolie, an bezüglich der Hülle außenliegenden Verbindungsflächen der Folienelemente angeordnet ist. Demnach ist zumindest eine der in Längsrichtung der Hülle verlaufenden Fügeverbindungen von außen zugänglich; somit kann die außenliegende Fügeverbindung bei Bedarf rasch und unkompliziert getrennt und anschließend wiederhergestellt werden. Zudem haben außerhalb der Hohlkammern angeordnete Verbindungsflächen den Vorteil, dass besonders stabile Fügeverbindungen angebracht werden können, da die Verbindungsflächen beidseitig, d.h. von oben und unten, zugänglich sind.

Um den im Betrieb des aufblasbaren Konzentrators auftretenden Belastungen standhalten zu können, ist es günstig, wenn die Fügeverbindung eine Nähnaht im Verbindungsbereich der Folienelemente aufweist. Die Nähnaht wird vorzugsweise an den außenliegenden Verbindungsflächen der jeweiligen zu fügenden Folienelemente angebracht.

Zur luftdichten Versiegelung des Verbindungsbereichs ist es dabei von Vorteil, wenn die Fügeverbindung zumindest eine Schweißnaht zwischen aufeinandertreffenden Verbindungsflächen der Folienelemente aufweist. Zweckmäßigerweise sind an den einzelnen Verbindungsflächen mehrere Schweißnähte vorgesehen, welche insbesondere mittels eines Ultraschallschweißverfahrens ausgebildet werden.

Bei einer alternativen bevorzugten Ausführung ist als Fügeverbindung zwischen den Folienelementen eine Klebe-Naht-Verbindung vorgesehen, die eine zwischen randseitigen Verbindungsflächen der Folienelemente angeordnete Klebeschicht und eine durch die Folienelemente und die Klebeschicht geführte Naht aufweisen. Um einen schleichenden Luftaustritt aus der Hülle des Konzentrators zu verhindern, ist es dabei günstig, wenn die Klebeschicht zwischen den Verbindungsflächen der Folienelemente im Wesentlichen luftdicht mit einer im nicht ausgehärteten Zustand der Klebeschicht angebrachten Naht verbunden ist. Die Anbringung der Naht im nicht ausgehärteten Zustand der Klebeschicht hat den Vorteil, dass sich die Klebeschicht dicht an die Naht anschmiegt. Somit kann der luftdichte Verschluss der Hülle gewährleistet werden. Weiters kann die Nähnaht mittels eines insbesondere außenseitig im Bereich vorragender Abschnitte der Nähnaht angebrachten KunststoffStreifens abgedichtet werden.

Als weitere bevorzugte Fügeverbindung zwischen den Folienelementen ist ein luftdichter Reißverschluss vorgesehen. Luftdichte Reißverschlüsse sind im Stand der Technik grundsätzlich bekannt; andererseits ergibt sich beim erfindungsgemäßen Konzentrator eine besonders vorteilhafte Anwendung, wenn der luftdichte Reißver-schluss als längsseitige Fügeverbindung zwischen außenliegenden Verbindungsstellen eingesetzt wird, da hierdurch das Öffnen des Konzentrators erheblich erleichtert wird.

Zum Verschließen des insbesondere schlauchförmigen Konzentrators ist es von Vorteil, wenn die an stirnseitigen Endbereichen der Hülle gebildeten Öffnungen mit passenden Endstücken luftdicht verschlossen sind.

Hinsichtlich einer zweckmäßigen Fertigung des Konzentrators ist es günstig, wenn die Endstücke durch Fortsetzungen von Folienelementen der Hülle gebildet sind, die mittels zumindest einer quer zur Längsrichtung der Hülle verlaufenden Fügeverbindung miteinander verbunden sind.

Zur Erzielung einer im unaufgeblasenen Zustand der Hülle aufrollbaren Transportstellung ist es von Vorteil, wenn jeweils eine quer zur Längsrichtung der Hülle verlaufende Fügeverbindung zwischen der oberen Seitenwandfolie und der Deckfolie bzw. zwischen der unteren Seitenwandfolie und der Bodenfolie vorgesehen ist. Die quer verlaufenden Fügeverbindungen zwischen der oberen Seitenwandfolie und der Deckfolie bzw. zwischen der unteren Seitenwandfolie und der Bodenfolie sind vorzugsweise im Wesentlichen in der gleichen horizontalen Ebene wie die in Längsrichtung der Hülle verlaufenden Fügeverbindungen zwischen den entsprechenden Folienelementen der Hülle angeordnet. Hierdurch können von den Endstücken verursachte Spannungen in der Hülle erheblich reduziert werden. Somit wird die gewünschte Geometrie der Hülle im aufgeblasenen Betriebszustand durch die Endstücke kaum beeinflusst. Im unaufgeblasenen Zustand der Hülle begrenzen die quer verlaufenden Fügeverbindungen gemeinsam mit den zugehörigen, jeweils im Wesentlichen in der gleichen Ebene angeordneten längsseitigen Fügeverbindungen im Wesentlichen plane Schichten, welche vorteilhafterweise ohne (bzw. mit vergleichsweise geringer) Faltenbildung aufrollbar sind.

Um die dreidimensionale Wölbung der Endstücke im aufgeblasenen Zustand der Hülle zu verbessern, ist es günstig, wenn die Endstücke zumindest teilweise aus einem elastisch verformbaren Material gebildet sind. Diese Ausführung ermöglicht es, den Einfluss der Endstücke auf die insbesondere zylindrische Geometrie der Hülle gering zu halten.

In der Herstellung des zuvor beschriebenen Konzentrators können aus Materialbahnen einzelne Folienelemente erzeugt werden, die in einer im Wesentlichen planen Stellung über Fügeverbindungen zur fertigen Hülle zusammengesetzt werden, die im unaufgeblasenen Zustand in einer Transportstellung aufrollbar ist.
Demnach werden in der Fertigungsanlage Materialbahnen gefördert, aus denen einzelne Folienelemente erzeugt werden, die in einer im Wesentlichen planen Stellung gefügt werden. Dies hat den fertigungstechnischen Vorteil, dass ein seitliches Umschlagen der zu fügenden Folien vermieden werden kann; das Falten der Folie entlang einer Faltlinie wäre insbesondere bei einer dünnwandigen Ausführung der gefügten Folien nicht bzw. nur mit großem Aufwand möglich. Zum Transport des Konzentrators kann die Hülle in die Transportstellung aufgerollt werden, um in dieser platzsparenden Anordnung an den Einsatzort transportiert zu werden; der Absorber bzw. Receiver, welcher üblicherweise aus einem steifen und somit nicht aufrollbaren Material besteht, wird dabei gesondert von der Hülle transportiert und erst am Einsatzort mit der Konzentrator-Hülle verbunden.
Zum Transport der Hülle ist es insbesondere von Vorteil, wenn die fertige Hülle in der Transportstellung auf eine Rolle aufgerollt wird. Im aufgerollten Zustand liegen die verschiedenen Folien in einer geschichteten, im Wesentlichen faltlinienfreien Anordnung vor. Somit kann vorteilhafterweise eine "Rolle-zu-Rolle"-Fertigung erfolgen, bei welcher die zur Herstellung der Hülle erforderlichen Materialbahnen auf Rolle geliefert und in der Fertigungsanlage zur fertigen Hülle verarbeitet werden, welche zum Transport auf eine geeignete Rolle aufgewickelt wird.
Um die Fertigungskosten des Konzentrators zu senken, ist es weiters günstig, wenn zur kontinuierlichen Produktion mehrerer Hüllen einzelne Folienelemente aus Endlosbahnen erzeugt werden, die in festgelegten Abständen abgetrennt werden. Somit können die aufblasbaren Konzentratoren in einer kontinuierlichen Endlosproduktion hergestellt werden, so dass sich die Stückkosten gegenüber einer Einzelfertigung bzw. Kleinserie erheblich reduzieren. Die zur Serienfertigung der Konzentratoren genutzte Fertigungsanlage weist dabei im Stand der Technik für sich genommen bekannte Förder- bzw. Verarbeitungseinrichtungen auf, welche die Endlosbahnen bereitstellen, je nach Bedarf zusammen- bzw. auseinander führen und an geeigneten Stellen zusammenfügen. In festgelegten Zeitintervallen wird die fertiggestellte Hülle abgetrennt, um die Fertigung der daran anschließenden Hülle fortzusetzen.

Zur Vermeidung von Materialabfällen ist es insbesondere günstig, wenn eine Folie, insbesondere eine untere Seitenwandfolie, obere Seitenwandfolie oder Deckfolie, der Hülle aus zwei langgestreckten Materialbahnen erzeugt wird, die in einem festgelegten Abstand über Endabschnitte verbunden werden, wobei eine Ausnehmung für die Reflektorfolie bzw. eine Ausnehmung für die transparente Folie gebildet wird. Zur Herstellung von Folien mit mittiger Ausnehmung werden daher einzelne Folienelemente erzeugt, welche in der Anlage konfektioniert, zusammengeführt und miteinander verbunden werden. Im Unterschied zu einer Ausführung, bei welcher die Ausnehmung für die Reflektorfolie aus einem einstückigem Folienelement geschnitten wird, fallen somit kaum Materialabfälle an, da die langgestreckten Materialbahnen in geeigneten Abständen über die Endabschnitte derart verbunden werden, dass die Ausnehmung mit der gewünschten Form für die anschließend eingefügte Reflektorfolie ausgebildet wird. Zudem hat diese Ausführung den Vorteil, dass die vergleichsweise schmalen Materialbahnen in der Fertigungsanlage wesentlich leichter gehandhabt werden können, wodurch die Produktionskosten weiter gesenkt werden können.

Die Erfindung wird nachstehend anhand eines in den Zeichnungen dargestellten Ausführungsbeispiels, auf das sie jedoch nicht beschränkt sein soll, noch weiter erläutert.

Im Einzelnen zeigen in den Zeichnungen:
Fig. 1 eine schaubildliche Ansicht eines Ausschnitts eines aufblasbaren Konzentrators zur Bündelung von Sonnenstrahlung gemäß einer ersten Ausführungsform der Erfindung, mit einer zylindrischen Hülle, welche aus einzelnen, über Fügeverbindungen miteinander verbundenen Folienelementen zusammengesetzt ist;
Fig. 2 das in Fig. 1 mit einem Rechteck eingerahmte Detail A in dem gegenüber vergrößerten Maßstab;
Fig. 3 das in Fig. 2 mit einem Rechteck eingerahmte Detail B in dem gegenüber vergrößerten Maßstab;
Fig. 4 eine auseinandergezogene Ansicht der verschiedenen Folien des aufblasbaren Konzentrators gemäß Fig. 1 bis 3;
Fig. 5a eine schematische Querschnittsansicht des Konzentrator-Kissens gemäß den Fig. 1 bis Fig. 4 zur Veranschaulichung der Fügeverbindungen zwischen den einzelnen Folienelementen;
Fig. 5b eine Fig. 5a entsprechende Querschnittsansicht eines nicht Teil der Erfindung bildenden Konzentrators, bei welchem einzelne Folien seitlich umgeschlagen sind;
Fig. 5c eine schematische Querschnittsansicht einer alternativen Ausführung des Konzentrator-Kissens;
Fig. 6a einen Ausschnitt einer unteren Seitenwandfolie der Hülle, welche aus vier Folienelementen zusammengesetzt ist, die eine Ausnehmung für eine Reflektorfolie begrenzen;
Fig. 6b eine Fig. 6a entsprechende Ansicht einer alternativen Ausführung der unteren Seitenwandfolie;
Fig. 7 eine Seitenansicht des Konzentrators, welcher an stirnseitigen Endbereichen der Hülle mit Endstücken luftdicht verschlossen ist;
Fig. 8 eine schaubildliche Gesamtansicht des Konzentrators gemäß Fig. 7, wobei quer zur Längsrichtung der Hülle verlaufende Fügeverbindungen an den Endstücken der Hülle ersichtlich sind;
Fig. 9 schematisch eine bevorzugte Ausführung der Fügeverbindung als kombinierte Nähnaht/Schweißverbindung;
Fig. 10 eine Fig. 9 entsprechende Ansicht, jedoch mit einer Klebe-Naht-Verbindung;
Fig. 11 schematisch einen Ausschnitt der Fertigungsanlage zur Herstellung des Konzentrators, wobei Materialbahnen in einer im Wesentlichen planen Stellung gefügt werden; und
Fig. 12 schematisch die Serienproduktion der Folien mit zentraler Ausnehmung, welche durch periodisches Einfügen von Endabschnitten gebildet wird.

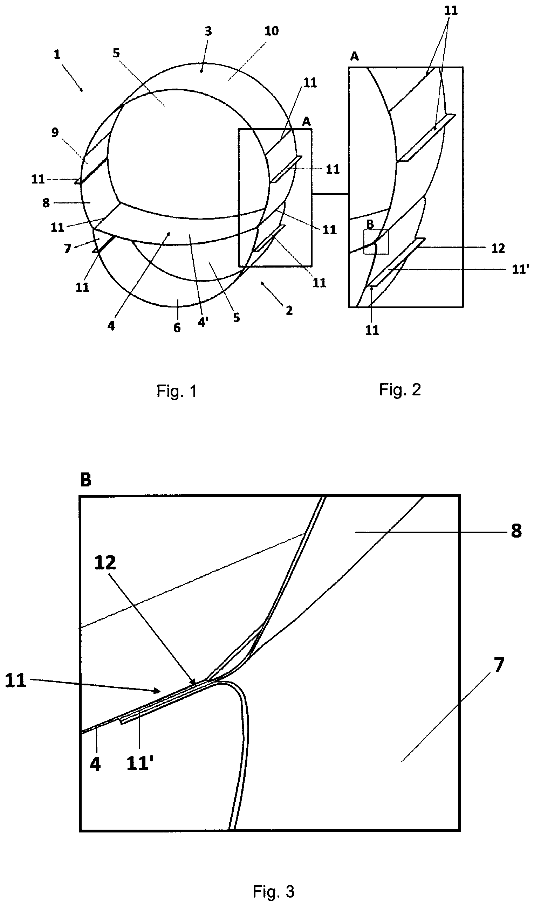

Fig. 1 zeigt einen aufblasbaren Konzentrator 1 zur Bündelung der Sonnenstrahlung zwecks Umwandlung der Strahlungsenergie der Sonne in nutzbare Energie. Der Konzentrator 1 weist eine langgestreckte, im Wesentlichen zylindrische bzw. schlauchförmige Hülle 2 auf, die ein lichtdurchlässiges Eintrittsfenster 3 zum Einkoppeln der Sonnenstrahlung aufweist. Die Hülle 2 wird durch eine Reflektorfolie 4 in zumindest zwei getrennte Hohlkammern 5 unterteilt, welche jeweils luftdicht verschlossen sind. Die Reflektorfolie 4 weist eine Spiegelfläche 4' auf, welche die eingekoppelte Sonnenstrahlung in Richtung eines Absorbers (in den Fig. nicht gezeigt) bündelt. Der Absorber bzw. das Solarpaneel befindet sich im Fokusbereich der Spiegelfläche 4' innerhalb der oberen Hohlkammer 5 der Hülle 2. Als Absorber kann insbesondere eine mediendurchströmte Röhre oder ein Photovoltaikelement vorgesehen sein. Der Konzentrator 1 kann somit sowohl für konzentrierte Photovoltaik (CPV = Concentrated Photovoltaics), als auch für konzentrierte Solarthermie (CSP = Thermal Concentrated Solar Power) verwendet werden. Im Betrieb des Konzentrators 1 wird in den Hohlkammern 5 ein Druckunterschied ausgebildet, wodurch die Reflektorfolie 4 gleichmäßig konkav gewölbt wird, so dass die eingekoppelte Sonnenstrahlung von der Spiegelfläche 4' in den Absorber fokussiert wird. Da die Hülle 2 mit Druckluft in den Hohlkammern 5 selbsttragend ausgelegt ist, sind keine aufwändigen Tragevorrichtungen notwendig. Somit lässt sich gegenüber einem herkömmlichen Solarkonzentrator ein erheblich niedrigeres Gewicht realisieren.

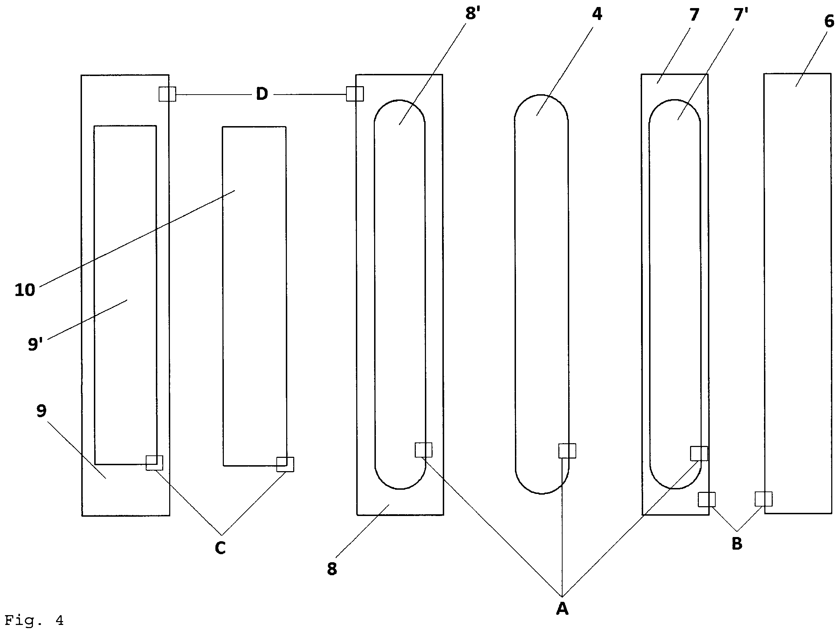

Die Hülle 2 weist eine Bodenfolie 6 auf, welche im Betrieb des Konzentrators 1 einer Bodenfläche des Einsatzortes zugewandt ist. Zudem kann eine (in den Fig. nicht gezeigte) Nachführeinrichtung vorgesehen sein, um die Hülle 2 dem Sonnenlauf nachzuführen. Die Seitenwände der Hülle 2 (bezogen auf die aufgeblasene Betriebsstellung des Konzentrators 1) sind durch eine untere Seitenwandfolie 7 und eine obere Seitenwandfolie 8 gebildet. Die untere Seitenwandfolie 7 und die obere Seitenwandfolie 8 weisen im Wesentlichen deckungsgleiche Ausnehmungen 7' bzw. 8' (vgl. Fig. 4) auf, welche durch die Reflektorfolie 4 verschlossen sind. Die obere Seitenwandfolie 8 ist mit einer Deckfolie 9 verbunden, welche zur Ausbildung des Eintrittsfensters 3 eine mit einem transparenten Folienelement 10 verschlossene Ausnehmung 9' aufweist (vgl. Fig. 4).

Derartige aufblasbare Sonnenkollektoren wurden bisher lediglich als Einzelstücke gefertigt, da sich die Verarbeitung großflächiger Folien zur Ausbildung der Hülle 2 als sehr schwierig herausgestellt hat. Zudem fallen hohe Transportkosten an, da die Konzentratoren sehr große Abmessungen mit einer Länge von mehr als 20 m, insbesondere auch mehr als 50 m, aufweisen können. Selbst im nicht mit Luft befüllten Zustand nimmt die Hülle 2 des Konzentrators 1 somit sehr viel Raum ein, so dass der Transport bekannter Konzentratoren 1 dieser Art bislang lediglich mit großem Aufwand und hohen Kosten möglich war.

Um den Konzentrator 1 hinsichtlich dieser Probleme zu verbessern, weist die Hülle 2 einzelne Folienelemente auf, die über Fügeverbindungen 11 miteinander verbunden sind. Die Hülle 2 ist dabei im unaufgeblasenen Zustand in einer im Wesentlichen faltlinienfrei geschichteten, aufrollbaren Transportstellung anordenbar. Der Konzentrator 1 kann in dieser Transportstellung platzsparend aufgerollt bzw. aufgewickelt werden, so dass der Transport zum Einsatzort einfach und kosteneffizient gestaltet wird.

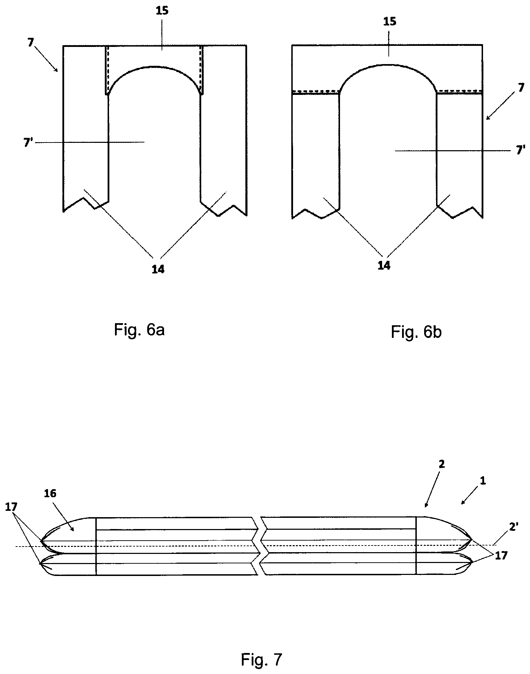

Fig. 2 zeigt eine Detailansicht der Hülle 2 im Bereich einer Seitenwand der Hülle 2. Die Bodenfolie 6 ist an ihren beiden Längsrändern, welche sich auf den gegenüberliegenden Seiten der Hülle 2 befinden, jeweils über eine in Längsrichtung 2' (vgl. Fig. 7) der Hülle 2 verlaufende Fügeverbindung 11' mit der unteren Seitenwandfolie 7 verbunden. Die Bodenfolie 6 und die untere Seitenwandfolie 7 weisen hierfür Verbindungsflächen 12 auf, welche durch flanschartig nach außen abgewinkelte Längsränder der Boden-folie 6 bzw. der unteren Seitenwandfolie 7 gebildet sind. Die obere Seitenwandfolie 8 und die Deckfolie 9 sind entsprechend an beiden Seiten der Hülle 2 über in Längsrichtung 2' der Hülle 2 verlaufende Fügeverbindungen 11' miteinander verbunden. Als Verbindungsflächen 12 sind auch hier flanschartig nach außen abgewinkelte Längsränder, in diesem Fall der oberen Seitenwandfolie 8 und Deckfolie 9, vorgesehen. Die Fügeverbindungen 11' erstrecken sich dabei im Wesentlichen über die gesamte Länge des Konzentrators 1. Zur Durchführung von Montage- bzw. Wartungsarbeiten können die außenliegenden Fügeverbindungen 11' auf einfache Weise getrennt werden, da die Verbindungsflächen 12 von außen zugänglich sind; das Wiederverschließen der Hülle 2 ist gleichermaßen an den außenliegenden Verbindungsflächen 12 möglich. Zudem haben die außen angeordneten Fügeverbindungen 11' den Vorteil, dass sie von beiden Seiten zugänglich sind, was die Verwendung besonders stabiler Fügeverbindungen 11 ermöglicht.

Wie aus der Detailansicht gemäß Fig. 3 ersichtlich, sind die untere Seitenwandfolie 7, die obere Seitenwandfolie 8 und die Reflektorfolie 4 über eine in Längsrichtung 2' der Hülle 2 verlaufende Fügeverbindung 11' miteinander verbunden, welche zwischen randseitigen, bezüglich der Hülle 2 innenliegenden Verbindungsflächen 12 angeordnet ist. Bei der gezeigten bevorzugten Ausführung sind die Längsränder der Reflektorfolie 4 an beiden Seiten der Hülle 2 jeweils mit einem flanschartig nach innen abgewinkelten Längsrand der oberen Seitenwandfolie 8 verbunden, welche ihrerseits an einem flanschartig nach innen abstehenden Längsrand der unteren Seitenwandfolie 7 angebracht ist. Selbstverständlich wäre hier jedoch auch eine andere Abfolge denkbar.

Fig. 4 zeigt eine auseinandergezogene Ansicht der verschiedenen Folien der Hülle 2, wobei von links nach rechts die Deckfolie 9, die das Eintrittsfenster 3 ausbildende transparente Folie 10, die obere Seitenwandfolie 8, die Spiegelfolie 4, die untere Seitenwandfolie 7 und die Bodenfolie 6 ersichtlich sind. Zudem sind in Fig. 4 zusammengehörige Verbindungsflächen 12 der Fügeverbindungen 11 markiert. Im Einzelnen sind in Fig. 4 mit "A" die insbesondere aus Fig. 3 ersichtlichen Verbindungsflächen 12 zwischen oberer Seitenwandfolie 8, Reflektorfolie 4 und unterer Seitenwandfolie 7 bezeichnet; die Verbindung von unterer Seitenwandfolie 7 und Bodenfolie 6 ist mit "B" bezeichnet; "C" bezeichnet die zusammengehörigen Verbindungsflächen 12 zwischen der Deckfolie 9 und der transparenten Folie 10; schließlich bezeichnet "D" die entsprechenden Verbindungsflächen 12 von Deckfolie 9 und oberer Seitenwandfolie 8.

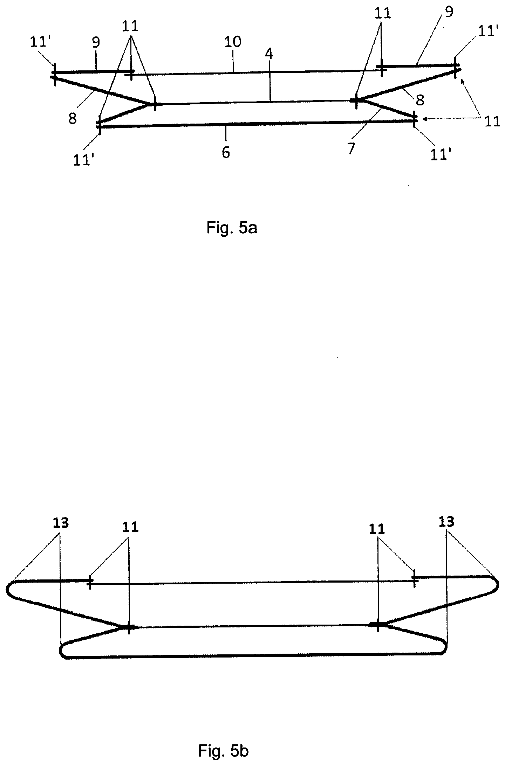

Fig. 5a zeigt eine schematische Querschnittsansicht der in den Fig. 1 bis 4 dargestellten Hülle 2, aus welcher die Anordnung der (lediglich schematisch eingezeichneten) Fügeverbindungen 11 ersichtlich ist. Die längsseitigen Fügeverbindungen 11' zwischen der Bodenfolie 6 und der unteren Seitenwandfolie 7 bzw. zwischen der oberen Seitenwandfolie 8 und der Deckfolie 9 ersetzen dabei Falt- bzw. Umschlagslinien, so dass die Hülle 2 im unaufgeblasenen Zustand als Abfolge im Wesentlichen planer Schichten vorliegt. Dies ermöglicht einerseits ein kompaktes Aufrollen der Hülle 2; zudem können in der Fertigung wesentliche Vorteile erzielt werden, wie unten noch genauer erläutert wird.

Zum Vergleich ist in Fig. 5b eine nicht Teil der Erfindung bildende Ausführung der Konzentrator-Hülle 2 gezeigt, bei welcher die untere Hälfte der Hülle 2 an den Längsrändern Umschlags- bzw. Faltlinien 13 ohne definierten Verlauf ausbildet, welche ein kompaktes Aufwickeln der Hülle 2 im unaufgeblasenen Zustand verhindern bzw. zumindest erheblich erschweren.

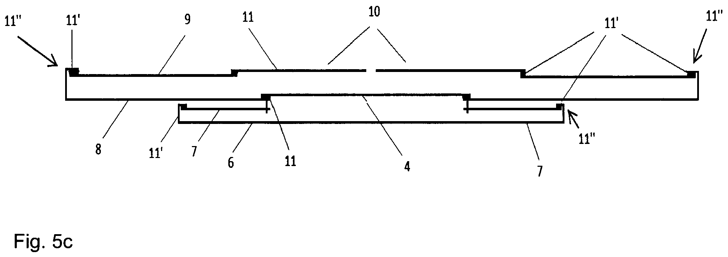

In Fig. 5c ist eine weitere Ausführungsform der Konzentrator-Hülle 2 gezeigt. Auch bei dieser Ausführung sind in Längsrichtung 2' verlaufende Fügeverbindungen 11' vorgesehen, wobei die Fügeverbindungen 11' zwischen der Bodenfolie 6 und der unteren Seitenwandfolie 7 bzw. zwischen der oberen Seitenwandfolie 8 und der Deckfolie 9 bezogen auf den unaufgeblasenen Zustand die Längsränder der Hülle 2 bilden. Wie aus Fig. 5c ersichtlich, ist die Kante einer den Längsrand der Hülle 2 bildenden Folie um die entsprechende Kante der damit verbundenen Folie gefaltet, so dass zwischen der Bodenfolie 6 und der unteren Seitenwandfolie 7 bzw. zwischen der oberen Seitenwandfolie 8 und der Deckfolie 9 ein Überlapp 11" entsteht. Hiermit werden im unaufgeblasenen Zustand definierte Längsfalten geschaffen, welche das Aufwickeln der Konzentrator-Hülle 2 im Vergleich zu einer Ausführung ohne definierten Verlauf der Faltkanten im Bereich der Längsränder der Hülle 2, wie bei der Ausführung gemäß Fig. 5b, beträchtlich erleichtern. Die gezeigten Fügeverbindungen 11' sind im aufgeblasenen Zustand hauptsächlich Scherbelastungen ausgesetzt. Bei dieser Ausführung der Fügeverbindungen 11' werden vorzugsweise Schweiß- bzw. Klebeverbindungen eingesetzt.

Gemäß einer (nicht gezeigten) Ausführung können auch weitere definierte Längsfalten der Konzentrator-Hülle 2 vorgesehen sein, wenn mehr als zwei Folienbahnen für die obere bzw. untere Hälfte der Konzentrator-Hülle 2 verwendet werden.

Fig. 6a und Fig. 6b zeigen jeweils eine bevorzugte Ausführungsform der unteren Seitenwandfolie 7. Um den Materialverschnitt bei der Herstellung der Hülle 2 gering zu halten, sind die Folien mit einer zentralen Ausnehmung für die Reflektorfolie 4 bzw. für die transparente Folie 10, d.h. die Deckfolie 9, die untere Seitenwandfolie 7 und die obere Seitenwandfolie 8, aus mehreren, zweckmäßigerweise vier, Folienelementen zusammengesetzt. Dies ist in den Fig. 6a, 6b am Beispiel der unteren Seitenwandfolie 7 veranschaulicht; die Deckfolie 9 und die obere Seitenwandfolie 8 können entsprechend aufgebaut sein.

Gemäß Fig. 6a weist die untere Seitenwandfolie 7 zwei langgestreckte, im Wesentlichen über die gesamte Länge der Hülle 2 verlaufende Folienstücke 14 auf, welche an ihren beiden längsseitigen Endbereichen über quer dazu angeordnete Endabschnitte 15 miteinander verbunden sind. Der Abstand der langgestreckten Folienstücke 14 legt die Breite der Spiegelfläche 4' fest. Die Länge der Spiegelfläche 4' wird durch den Abstand der beiden Endabschnitte 15 in Längsrichtung 2' der Hülle 2 bestimmt. Die Innenränder der Endabschnitte 15 weisen dabei einen bogenförmig gekrümmten Verlauf auf. Somit wird die Ausnehmung 7' nicht durch Ausschneiden einer einstückigen Folie gebildet, sondern als Zwischenraum zwischen den Folienstücken 14 bzw. den Endabschnitten 15 ausgebildet, wodurch der Materialabfall erheblich verringert werden kann.

Fig. 6b zeigt eine geringfügig modifizierte Ausführung der unteren Seitenwandfolie 7, bei welcher sich die Endabschnitte 15 über die gesamte Breite der unteren Seitenwandfolie 7 erstrecken.

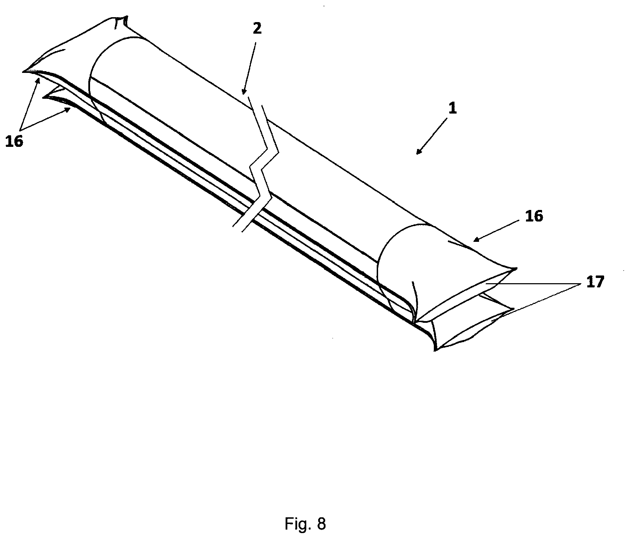

Die Fig. 7 und 8 zeigen jeweils eine Gesamtansicht des schlauchförmigen Konzentrators 1, welcher an stirnseitigen Endbereichen der Hülle 2 mit passenden Endstücken 16 luftdicht verschlossen ist. Die Endstücke 16 sind durch Fortsetzungen von Folienelementen der Hülle 2 gebildet, die an beiden Enden der Hülle 2 jeweils über zwei quer zur Längsrichtung 2' der Hülle 2 verlaufende Fügeverbindungen 17 miteinander verbunden sind. Die quer verlaufenden Fügeverbindungen 17 sind zwischen der oberen Seitenwandfolie 8 und der Deckfolie 9 bzw. zwischen der unteren Seitenwandfolie 7 und der Bodenfolie 6 vorgesehen. Wie insbesondere aus Fig. 7 ersichtlich, sind die quer verlaufenden Fügeverbindungen 17 jeweils ungefähr in der Mittelebene der oberen bzw. unteren Hälfte der Hülle 2 angeordnet. Die quer verlaufenden Fügeverbindungen 17 sind zudem im Wesentlichen in der gleichen Ebene wie die in Längsrichtung 2' der Hülle verlaufenden Fügeverbindungen 11' zwischen den entsprechenden Folienelementen, d.h. zwischen oberer Seitenwandfolie 8 und Deckfolie 9 bzw. zwischen unterer Seitenwandfolie 7 und Bodenfolie 6, angeordnet. Diese Ausführung hat den Vorteil, dass der endseitige Verschluss der Hülle 2 mit den Endstücken 16 lediglich geringen Einfluss auf die Geometrie der Hülle 2 im aufgeblasenen Betriebszustand nimmt. Wie aus Fig. 7 ersichtlich, weicht die Gestalt der Hülle 2 im Bereich der Endstücke 16 lediglich in einem kurzen Abschnitt von der schlauchförmigen bzw. zylindrischen Geometrie der übrigen Abschnitte der Hülle 2 ab. Somit kann eine im Wesentlichen gleichbleibende Krümmung der Reflektorfolie 4 entlang der Hülle 2 erreicht werden. Dies hat den Vorteil, dass die Fokussierung der Sonnenstrahlung im Absorber im Wesentlichen über die gesamte Länge der Hülle 2 in einer präzise definierten Fokuslinie erfolgt.

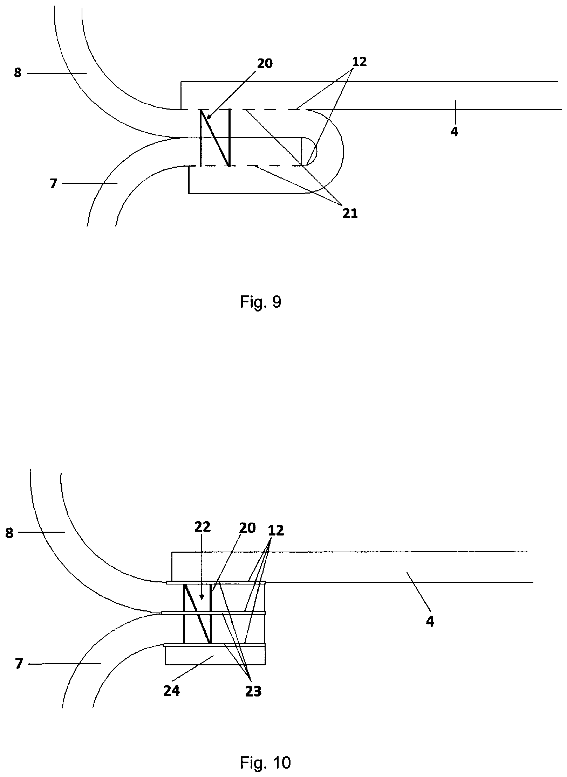

Fig. 9 zeigt eine besonders bevorzugte Ausführung der Fügeverbindungen 11, welche beispielhaft anhand der Verbindung zwischen oberer Seitenwandfolie 8, unterer Seitenwandfolie 7 und Reflektorfolie 4 veranschaulicht ist. Demnach weist die Fügeverbindung 11 eine Nähnaht 20 im Verbindungsbereich der Folienelemente auf. Beim gezeigten Ausführungsbeispiel weist die Fügeverbindung 11 weiters zwei Schweißnähte 21 zwischen aufeinander treffenden Verbindungsflächen 12 der Folienelemente auf. Zum luftdichten Verschluss der Hülle 2 ist, wie in Fig. 9 gezeigt, die obere Seiten-wandfolie 8 um den längsseitigen Rand der unteren Seitenwandfolie 7 umgebogen.
Fig. 10 zeigt eine alternative Ausführung der Fügeverbindung 11, welche als Klebe-Naht-Verbindung 22 ausgeführt ist, die randseitige Verbindungsflächen 12 der Folienelemente verbindet. Die Klebe-Naht-Verbindung 22 weist Klebeschichten 23 und eine durch die Verbindungsflächen 12 gefädelte Nähnaht 20 auf. Zur luftdichten Versiegelung des Verbindungsbereichs ist zudem außenseitig im Bereich vorragender Abschnitte der Nähnaht 20 ein KunststoffStreifen 24 vorgesehen. Alternativ kann bei einer (in den Fig. nicht gezeigten) Ausführung vorgesehen sein, dass die Klebeschicht zwischen den Verbindungsflächen der Folienelemente im Wesentlichen luftdicht mit einer im nicht ausgehärteten Zustand der Klebeschicht angebrachten Nähnaht 20 verbunden ist, wodurch sich die Klebeschicht eng an die Nähnaht 20 anlegt, und somit einen Luftaustritt verhindert.

Im Folgenden wird ein Verfahren zur Herstellung des in den Fig. 1 bis 10 gezeigten Konzentrators 1 näher erläutert, bei welchem aus Materialbahnen einzelne Folienelemente erzeugt werden, die über Fügeverbindungen 11 zur fertigen Hülle 2 zusammengesetzt werden. Ein wesentlicher Aspekt des Verfahrens besteht zudem darin, dass die Folienelemente der Hülle 2 in einer im Wesentlichen planen Stellung gefügt werden, wodurch ein fertigungstechnisch aufwändiges seitliches Umschlagen der Folien vermieden werden kann.
Die Fertigungsanlage zur Serienfertigung der Konzentratoren 1 weist hierfür verschiedenste Abwickelvorrichtungen, Fördereinrichtungen, Anpressvorrichtungen, Regelungseinrichtungen etc. auf, welche im Stand der Technik grundsätzlich bekannt sind, und somit nachstehend nur dann näher erläutert werden, wenn sie für die Erfindung von besonderer Bedeutung sind.

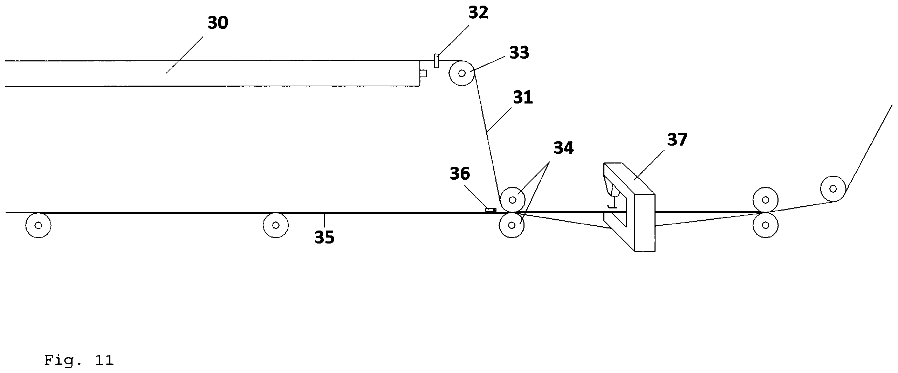

Fig. 11 zeigt schematisch jenen Teil der Fertigungsanlage, in welchem die Bodenfolie 6 mit den zuvor in einer anderen Station der Anlage zusammengefügten Seitenwandfolien 7, 8 bzw. Reflektorfolie 4 verbunden wird. Wie aus Fig. 11 ersichtlich, ist eine Fördereinrichtung 30 zum Fördern einer Endlosbahn 31 vorgesehen, aus der in Serie Bodenfolien 6 für hintereinander produzierte Konzentratoren 1 erzeugt werden. Im Anschluss an die Fördereinrichtung 30 ist eine Bahnkantenregelung vorgesehen, welche zum Ausrichten der Endlosbahn 31 und zur Korrektur etwaiger Bahnlauffehler dient. Dabei wird mittels eines Infrarot-Sensors 32 die vorbeilaufende Folienkante detektiert, mit einem Sollwert bzw. Referenzwert verglichen und über eine schwenkbare Wendestange, die das Stellglied der Regelung darstellt, wieder genau positioniert. Die Endlosbahn 31 wird über eine Umlenkwalze 33 umgelenkt. Anschließend wird die Endlosbahn 31 zwischen zwei Anpresswalzen 34 geführt. In der gezeigten Station der Anlage wird zudem eine Endlosbahn 35 gefördert, die aus zuvor gefügten Endlosbahnen besteht, welche die Seitenwandfolien 7, 8 und die Reflektorfolie 4 ausbilden. Die Endlosbahn 35 wird vor dem Erreichen der Anpresswalzen 34 über eine Kleberdüse 36 mit einer Klebeschicht versehen, welche über den Anpressdruck der Anpresswalzen 34 zwischen den zu fügenden Endlosbahnen 31, 35 verfestigt wird. Anschließend werden die verklebten Endlosbahnen 31, 35 einer Näheinheit 37 zugeführt, welche nach einer bekannten Technik mit Ober- und Unterfaden arbeitet. Zur Fertigstellung der längsseitigen Fügeverbindung 11' erzeugt die Näheinheit 37 eine kontinuierliche Längsnaht 20 zwischen der Endlosbahn 31 und der Endlosbahn 35. Bei einer alternativen Ausführung (nicht gezeigt) ist anstelle der Kleberdüse 36 eine Schweißapparatur vorgesehen, welche zwischen aufeinander treffenden Verbindungsflächen 12 der Endlosbahnen 31, 35 geeignete Schweißnähte 21 erzeugt, welche anschließend mit einer Nähnaht 20 durchsetzt werden. Die Anordnung der Schweißnähte ist in Fig. 9 im Zusammenhang mit der Verbindung von unterer 7 und oberer Seitenwandfolie 8 bzw. Spiegelfolie 4 gezeigt.

Wie aus Fig. 11 ersichtlich, können die Endlosbahnen 31, 35 in einer im Wesentlichen ebenen, übereinander angeordneten Stellung gefügt werden, so dass kein längsseitiges Umfalten der Endlosbahnen 31, 35 notwendig ist. Dies stellt insbesondere für dünnwandige Ausführungen der Kunststofffolien - bei welchen ein Umschlagen fertigungstechnisch nicht bzw. nur sehr schwer möglich wäre - eine erhebliche Verbesserung des Produktionsablaufes dar. Ein weiterer Vorteil besteht darin, dass die längsseitigen Fügeverbindungen 11' außen entlang der Hülle 2 angeordnet und somit beidseitig zugänglich sind, was die Verwendung der beschriebenen stabilen Fügeverbindungen 11 mit Nähnaht 20 ermöglicht.

Die Herstellung der übrigen, aus den Fig. 1 bis 10 ersichtlichen Fügeverbindungen 11 folgt - abgesehen von gewissen Anpassungen an die unterschiedliche Formgebung der jeweiligen Folienelemente etc. - dem oben erörterten Beispiel, so dass zwecks Vermeidung von Wiederholungen auf vorstehende Erläuterungen verwiesen werden kann.

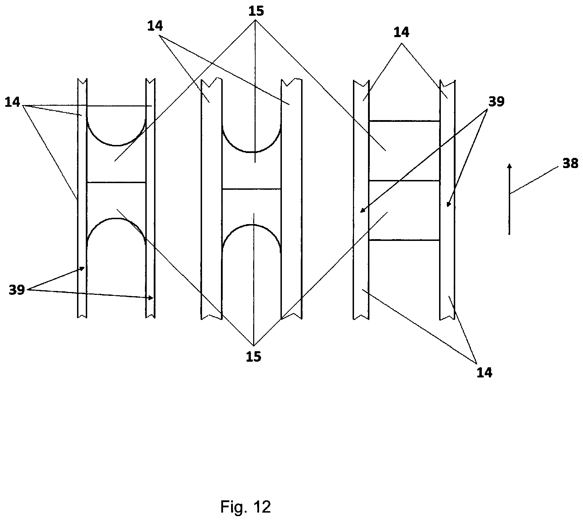

Fig. 12 zeigt schematisch die kontinuierliche Produktion von unterer Seitenwandfolie 7 (links), oberer Seitenwandfolie 8 (Mitte) und Deckfolie 9 (rechts), jeweils für zwei hintereinander produzierte Hüllen 2. Die Produktionsrichtung ist in Fig. 12 mit einem Pfeil 38 eingezeichnet. Wie in Fig. 12 schematisch ersichtlich, werden die untere Seitenwandfolie 7, obere Seitenwandfolie 8 und Deckfolie 9 zur Ausbildung der zentralen Ausnehmung 7', 8', 9' jeweils aus vier Folienelementen, zwei langgestreckten Folienstücken 14 und zwei quer dazu angeordneten Endabschnitten 15, zusammengefügt. Zur Fertigung der langgestreckten, längsseitigen Folienstücke 14 werden kontinuierlich Endlosbahnen 39 in einem Abstand zueinander gefördert, welcher die Breite der Ausnehmung 7', 8', 9' festlegt. Die Endlosbahnen 39 können zuvor durch Teilung einer einzigen Endlosbahnen erzeugt worden sein. Je nach gewünschter Länge des Konzentrators 1 werden in passenden Intervallen die Endabschnitte 15 eingesetzt, welche in einer Nebenlinie gefertigt werden. Die Endabschnitte 15 werden dabei über geeignete Fügeverbindungen 11, insbesondere Schweißverbindungen, mit den Folienstücken 14 verbunden. Die Schweißverbindungen können beispielsweise im Ultraschallschweiß-verfahren zwischen einem Amboss und einer Sonotrode (nicht gezeigt) erzeugt werden. Die Ausnehmungen 7', 8', 9' werden somit allseitig durch die jeweiligen Folienelemente (Folienstücke 14 und Endabschnitte 15) begrenzt, um Materialeinsparungen gegenüber einem Ausschneiden der Ausnehmungen 7', 8', 9' zu erzielen.

Zur Fertigstellung der Hülle 2 wird diese an den beiden Enden verschlossen und von der nachfolgenden Hülle 2 getrennt. Hierfür eignet sich insbesondere ein Trennschweißverfahren, mit welchem die Vorgänge "Trennen der hintereinander produzierten Hüllen 2", "Verschließen der Hohlkammern 5" und "Abdichten der Hülle 2" in einem einzigen Arbeitsschritt ausgeführt werden können. Aufgrund der vergleichsweise geringen Belastungen, welche im Bereich der Endstücke 16 der Hülle 2 auftreten, kann eine einfache Schweißnaht als Fügeverbindung 11 verwendet werden. Alternativ könnte auch eine Klebe-Naht-Verbindung 22 herangezogen werden, wofür es jedoch erforderlich wäre, die fertiggestellte Hülle 2 von der nachfolgenden Hülle 2 zu trennen, bevor die Endstücke 16 vernäht werden können.

## Patentansprüche

1. Aufblasbarer Konzentrator (1) zur Bündelung von Strahlung, insbesondere Sonnenstrahlung, in einem daran befestigbaren Absorber, mit einer in einem aufgeblasenen Betriebszustand im Wesentlichen schlauchförmigen Hülle (2), die ein lichtdurchlässiges Eintrittsfenster (3) zum Einkoppeln der Strahlung aufweist, und einer die Hülle (2) in zumindest zwei Hohlkammern (5) trennenden Reflektorfolie (4), die eine die eingekoppelte Strahlung in Richtung des Absorbers reflektierende Spiegelfläche (4') aufweist, wobei die Hülle (2) aus einzelnen, über Fügeverbindungen (11; 11', 17) miteinander verbundenen Folienelementen zusammengesetzt ist, wobei die Hülle (2) im unaufgeblasenen Zustand in einer aufrollbaren Transportstellung anordenbar ist, wobei die Hülle (2) eine Bodenfolie (6) aufweist, die an gegenüberliegenden Längsrändern jeweils über eine der Fügeverbindungen (11') mit einer unteren Seitenwandfolie (7) der Hülle verbunden ist, wobei die Fügeverbindungen (11'), die die Bodenfolie (6) mit den unteren Seitenwandfolien (7) verbinden, jeweils im Wesentlichen über die gesamte Länge der Hülle (2) verlaufen und im unaufgeblasenen Zustand der Hülle (2) jeweils einen Längsrand der Hülle (2) definieren, wobei die Hülle (2) im unaufgeblasenen Zustand einerseits in einer im Wesentlichen faltlinienfreien Transportstellung angeordnet ist, in welcher die verschiedenen Folien der Hülle als aufeinanderfolgende Schichten gestapelt sind oder andererseits die Fügeverbindungen (11') jeweils am Längsrand der Hülle (2) eine definierte Längsfalte ausbilden, wobei eine Kante der Bodenfolie (6) um eine entsprechende Kante der damit verbundenen unteren Seitenwandfolie (7) gefaltet ist, so dass zwischen der Bodenfolie (6) und der unteren Seitenwandfolie (7) ein Überlapp (11") entsteht.

2. Aufblasbarer Konzentrator (1) nach Anspruch 1, **dadurch gekennzeichnet, dass** die Hülle (2) eine an die untere Seitenwandfolie (7) anschließende obere Seitenwandfolie (8) der Hülle aufweist, die an gegenüberliegenden Längsrändern jeweils über eine Fügeverbindung (11') mit einer Deckfolie (9) verbunden ist.

3. Aufblasbarer Konzentrator (1) nach Anspruch 2, **dadurch gekennzeichnet, dass** die insbesondere aus mehreren, vorzugsweise vier, Folienelementen zusammengesetzte Deckfolie (9) zur Ausbildung des Eintrittsfensters (3) eine mit einem transparenten Folienelement (10) verschlossene Ausnehmung (9') aufweist.

4. Aufblasbarer Konzentrator (1) nach Anspruch 2 oder 3, **dadurch gekennzeichnet, dass** die jeweils insbesondere aus mehreren, vorzugsweise vier, Folienelementen zusammengesetzte untere (7) bzw. obere Seitenwandfolie (8) jeweils eine durch die Reflektorfolie (4) verschlossene Ausnehmung (7') bzw. (8') aufweist.

5. Aufblasbarer Konzentrator (1) nach einem der Ansprüche 1 bis 4, **dadurch gekennzeichnet, dass** zumindest eine Fügeverbindung (11; 11', 17), insbesondere die Fügeverbindung (11') zwischen der Bodenfolie (6) und der unteren Seitenwandfolie (7) bzw. zwischen der oberen Seitenwandfolie (8) und der Deckfolie (9), an bezüglich der Hülle (2) außenliegenden Verbindungsflächen (12) der Folienelemente angeordnet ist.

6. Aufblasbarer Konzentrator (1) nach einem der Ansprüche 1 bis 5, **dadurch gekennzeichnet, dass** die Fügeverbindung (11; 11', 17) eine Nähnaht (20) im Verbindungsbereich der Folienelemente aufweist.

7. Aufblasbarer Konzentrator (1) nach Anspruch 6, **dadurch gekennzeichnet, dass** die Fügeverbindung (11; 11', 17) zumindest eine Schweißnaht (21) zwischen aufeinandertreffenden Verbindungsflächen (12) der Folienelemente aufweist.

8. Aufblasbarer Konzentrator (1) nach einem der Ansprüche 1 bis 5, **dadurch gekennzeichnet, dass** als Fügeverbindung (11; 11', 17) zwischen den Folienelementen ein luftdichter Reißverschluss vorgesehen ist.

9. Aufblasbarer Konzentrator (1) nach einem der Ansprüche 1 bis 8, **dadurch gekennzeichnet, dass** die an stirnseitigen Endbereichen der Hülle (2) gebildeten Öffnungen mit passenden Endstücken (16) luftdicht verschlossen sind.

10. Aufblasbarer Konzentrator (1) nach Anspruch 9, **dadurch gekennzeichnet, dass** die Endstücke (16) durch Fortsetzungen von Folienelementen der Hülle (2) gebildet sind, die mittels zumindest einer quer zur Längsrichtung (2') der Hülle (2) verlaufenden Fügeverbindung (17) miteinander verbunden sind.

11. Aufblasbarer Konzentrator (1) nach Anspruch 10, **dadurch gekennzeichnet, dass** jeweils eine quer zur Längsrichtung (2') der Hülle (2) verlaufende Fügeverbindung (17) zwischen der oberen Seitenwandfolie (8) und der Deckfolie (9) bzw. zwischen der unteren Seitenwandfolie (7) und der Bodenfolie (6) vorgesehen ist.

12. Aufblasbarer Konzentrator (1) nach einem der Ansprüche 9 bis 11, **dadurch gekennzeichnet, dass** die Endstücke (16) zumindest teilweise aus einem elastisch verformbaren Material gebildet sind.

## Claims

1. Inflatable concentrator (1) for focusing radiation, in particular solar radiation, in an absorber that can be fastened thereto, comprising a sleeve (2) that is substantially tubular when in an inflated operating state and has a translucent inlet window (3) for coupling in the radiation, and a reflector film (4) that divides the sleeve (2) into at least two hollow chambers (5) and has a mirror surface (4') which reflects the coupled-in radiation towards the absorber, wherein the sleeve (2) is composed of individual film elements that are interconnected by means of joint connections (11; 11', 17), wherein the sleeve (2) can be arranged in a transport position in which it can be rolled up when in the deflated state, wherein the sleeve (2) has a base film (6) that is connected to a lower lateral wall film (7) of the sleeve on opposing longitudinal rims in each case by means of one of the joint connections (11'), wherein the joint connections (11') that connect the base film (6) to the lower lateral wall films (7) each extend substantially over the entire length of the sleeve (2) and each define a longitudinal rim of the sleeve (2) when the sleeve (2) is in the deflated state, wherein the sleeve (2) is arranged in a transport position that is substantially free of fold lines when in the deflated state, in which transport position the different films of the sleeve are stacked as successive layers, or the joint connections (11') each form a defined longitudinal fold on the longitudinal rim of the sleeve (2), wherein one edge of the base film (6) is folded around a corresponding edge of the lower lateral wall film (7) connected thereto so as to create an overlap (11") between the base film (6) and the lower lateral wall film (7).

2. Inflatable concentrator (1) according to claim 1, **characterised in that** the sleeve (2) has an upper lateral wall film (8) of the sleeve that is attached to the lower lateral wall film (7) and is connected to a cover film (9) on opposing longitudinal rims by means of a joint connection (11') in each case.

3. Inflatable concentrator (1) according to claim 2, **characterised in that** the cover film (9) which is composed in particular of a plurality of, preferably four, film elements and is intended to form the inlet window (3) has a recess (9') which is sealed by a transparent film element (10).

4. Inflatable concentrator (1) according to either claim 2 or claim 3, **characterised in that** the lower lateral wall film (7) or upper lateral wall film (8) which is composed in each case in particular of a plurality of, preferably four, film elements has a recess (7') or (8'), respectively, which is sealed by the reflector film (4).

5. Inflatable concentrator (1) according to any of claims 1 to 4, **characterised in that** at least one joint connection (11; 11', 17), in particular the joint connection (11') between the base film (6) and the lower lateral wall film (7) or between the upper lateral wall film (8) and the cover film (9), is arranged on connection surfaces (12) of the film elements that are external with respect to the sleeve (2).

6. Inflatable concentrator (1) according to any of claims 1 to 5, **characterised in that** the joint connection (11; 11', 17) has a sewn seam (20) in the connection region of the film elements.

7. Inflatable concentrator (1) according to claim 6, **characterised in that** the joint connection (11; 11', 17) has at least one weld seam (21) between converging connection surfaces (12) of the film elements.

8. Inflatable concentrator (1) according to any of claims 1 to 5, **characterised in that** an airtight zip fastener is provided as the joint connection (11; 11', 17) between the film elements.

9. Inflatable concentrator (1) according to any of claims 1 to 8, **characterised in that** the openings formed at end face regions of the sleeve (2) are sealed by suitable end pieces (16) so as to be airtight.

10. Inflatable concentrator (1) according to claim 9, **characterised in that** the end pieces (16) are formed by continuations of film elements of the sleeve (2) that are interconnected by means of at least one joint connection (17) extending transversely to the longitudinal direction (2') of the sleeve (2).

11. Inflatable concentrator (1) according to claim 10, **characterised in that** a joint connection (17) extending transversely to the longitudinal direction (2') of the sleeve (2) is provided in each case between the upper lateral wall film (8) and the cover film (9) or between the lower lateral wall film (7) and the base film (6).

12. Inflatable concentrator (1) according to any of claims 9 to 11, **characterised in that** the end pieces (16) are formed at least in part from an elastically deformable material.

## Revendications

1. Concentrateur (1) gonflable destiné à concentrer un rayonnement, en particulier un rayonnement solaire, dans un absorbeur pouvant être fixé dessus, avec un manchon (2), essentiellement en forme de flexible dans un état de fonctionnement gonflé, qui comporte une fenêtre d'entrée (3) translucide pour l'injection du rayonnement, et avec un film de réflecteur (4), séparant le manchon (2) en au moins deux chambres creuses (5), qui comporte une surface de miroir (4') réfléchissant le rayonnement injecté en direction de l'absorbeur, le manchon (2) se composant de différents éléments de film raccordés les aux autres par le biais de liaisons d'assemblage (11 ; 11', 17), le manchon (2) pouvant, dans l'état non gonflé, être disposé dans une position de transport enroulable, le manchon (2) comportant un film de fond (6) qui, sur des bords longitudinaux opposés, est raccordé respectivement par le biais d'une des liaisons d'assemblage (11') à un film de paroi latérale (7) inférieur, les liaisons d'assemblage (11') qui raccordent le film de fond (6) aux films de paroi latérale (7) inférieurs étant respectivement placées essentiellement sur toute la longueur du manchon (2) et, dans l'état non gonflé du manchon (2), définissant respectivement un bord longitudinal du manchon (2), le manchon (2) étant, dans l'état non gonflé, disposé d'une part dans une position de transport essentiellement exempte de lignes de pliage dans laquelle les différents films du manchon sont empilés sous forme de couches successives ou, d'autre part, les liaisons d'assemblage (11') constituant respectivement sur le bord longitudinal du manchon (2) un pli longitudinal défini, une arête du film de fond (6) étant pliée autour d'une arête correspondante du film de paroi latérale (7) inférieur qui y est raccordé de telle sorte qu'il se forme un chevauchement (11") entre le film de fond (6) et le film de paroi latérale (7) inférieur.

2. Concentrateur (1) gonflable selon la revendication 1, **caractérisé en ce que** le manchon (2) comporte un film de paroi latérale (8) supérieur du manchon (2), se raccordant au film de paroi latérale (7) inférieur, qui est, sur des bords longitudinaux opposés, raccordé à un film de couverture (9) respectivement par le biais d'une liaison d'assemblage (11').

3. Concentrateur (1) gonflable selon la revendication 2, **caractérisé en ce que** le film de couverture (9) en particulier composé de plusieurs, de préférence de quatre, éléments de film présente, pour la constitution de la fenêtre d'entrée (3), un creux (9') fermé avec un élément de film (10) transparent.

4. Concentrateur (1) gonflable selon la revendication 2 ou 3, **caractérisé en ce que** le film de paroi latérale (7) inférieur ou respectivement le film de paroi latérale (8) supérieur en particulier respectivement composé de plusieurs, de préférence de quatre, éléments de film comporte respectivement un creux (7') ou respectivement (8') fermé par le film de réflecteur (4).

5. Concentrateur (1) gonflable selon l'une des revendications 1 à 4, **caractérisé en ce qu'**au moins une liaison d'assemblage (11 ; 11', 17), en particulier la liaison d'assemblage (11'), est disposée entre le film de fond (6) et le film de paroi latérale (7) inférieur ou respectivement entre le film de paroi latérale (8) supérieur et le film de couverture (9), sur des surfaces de raccordement (12) des éléments de film situées à l'extérieur par rapport au manchon (2).

6. Concentrateur (1) gonflable selon l'une des revendications 1 à 5, **caractérisé en ce que** la liaison d'assemblage (11 ; 11', 17) comporte une ligne de couture (20) dans la zone de raccordement des éléments de film.

7. Concentrateur (1) gonflable selon la revendication 6, **caractérisé en ce que** la liaison d'assemblage (11 ; 11', 17) comporte au moins un cordon de soudure (21) entre des surfaces de raccordement (12) se rencontrant des éléments de film.

8. Concentrateur (1) gonflable selon l'une des revendications 1 à 5, **caractérisé en ce qu'**une fermeture à glissière étanche à l'air est prévue en tant que liaison d'assemblage (11 ; 11', 17) entre les éléments de film.

9. Concentrateur (1) gonflable selon l'une des revendications 1 à 8, **caractérisé en ce que** les ouvertures formées sur des zones d'extrémité, côté frontal, du manchon (2) sont fermées de façon étanche à l'air avec des pièces d'extrémité (16) adaptées.

10. Concentrateur (1) gonflable selon la revendication 9, **caractérisé en ce que** les pièces d'extrémité (16) sont formées par des continuations d'éléments de film du manchon (2) qui sont raccordées les unes aux autres au moyen d'au moins une liaison d'assemblage (17) placée transversalement à la direction longitudinale (2') du manchon (2).

11. Concentrateur (1) gonflable selon la revendication 10, **caractérisé en ce que** respectivement une liaison d'assemblage (17) placée transversalement à la direction longitudinale (2') du manchon (2) est prévue entre le film de paroi latérale (8) supérieur et le film de couverture (9) ou respectivement entre le film de paroi latérale (7) inférieur et le film de fond (6).

12. Concentrateur (1) gonflable selon l'une des revendications 9 à 11, **caractérisé en ce que** les pièces d'extrémité (16) sont formées au moins partiellement d'un matériau élastiquement déformable.
